# EUROPÄISCHE PATENTSCHRIFT

(11) **EP 3 296 813 B1**
(45) Veröffentlichungstag und Bekanntmachung des Hinweises auf die Patenterteilung: **13.05.2020**
(21) Anmeldenummer: 17191613.3
(22) Anmeldetag: 18.09.2017
(51) Int. Cl.: G03B 3/00, G03B 17/00, G03B 19/00, G06K 7/00, G06K 7/10

(54) **KAMERA FÜR DIE INDUSTRIELLE BILDVERARBEITUNG**
CAMERA FOR INDUSTRIAL IMAGE PROCESSING
CAMÉRA POUR LE TRAITEMENT D'IMAGE INDUSTRIEL

(30) Priorität: 19.09.2016 AT 508382016
(43) Veröffentlichungstag der Anmeldung: 21.03.2018
(73) Patentinhaber: B&R Industrial Automation GmbH, 5142 Eggelsberg (AT)
(72) Erfinder: Waldl, Andreas, 5142 Eggelsberg (AT)
(74) Vertreter: Patentanwälte Pinter & Weiss OG

(56) Entgegenhaltungen:
- WO-A2-02/50757
- US-A- 5 630 180
- US-A1- 2007 098 385
- US-A1- 2008 240 709
- US-A1- 2015 077 593

## Beschreibung

Die gegenständliche Erfindung betrifft eine Kamera für die industrielle Bildverarbeitung mit einem Kameramodul und einem lösbar damit verbundenen Objektivmodul mit einem optischen System mit zumindest einer optischen Linse und ein Verfahren zum Betreiben einer solchen Kamera für die industrielle Bildverarbeitung.

In der industriellen Bildverarbeitung, beispielsweise für Machine Vision Anwendungen, werden in der Regel Kamerasysteme eingesetzt, bei denen ein Kameramodul mit einem Bildsensor und ein Objektivmodul (auch einfach Objektiv genannt) mit einer Linsenanordnung (mindestens eine optische Linse) mechanisch getrennt und lösbar voneinander ausgeführt sind. Das ermöglicht es, ein Kameramodul mit verschiedenen austauschbaren Objektiven zu benutzen. Die mechanische Verbindung zwischen Kameramodul und Objektivmodul erfolgt dabei in der Regel über standardisierte Objektivanschlüsse, wie beispielsweise ein bekannter S-Mount, C-Mount oder CS-Mount Anschluss. Der Unterschied zwischen diesen Anschlüssen ist neben unterschiedlicher optischer Leistungsdaten im Wesentlichen die Baugröße. Ein S-Mount Anschluss verwendet ein M12 Gewinde, während ein C- und CS-Mount ein 1" Gewinde mit einer Steigung von 1/32" verwenden. Ein weiterer Unterschied ist das Auflagemaß, also der vorgegebene Abstand zwischen der Bildebene des Bildsensors und der Befestigungsfläche des Objektivs. Die DE 10 2012 111 231 A1 und die WO 2010/081060 A1 zeigen z.B. eine Kamera für die industrielle Bildverarbeitung, bei der verschiedenste Objektive, auch mit verschiedenen Anschlusssystemen, angeschlossen werden können. Damit wird zwar das Wechseln zwischen verschiedenen Anschlusssystemen ermöglicht bzw. erleichtert, nur obliegt es dem Anwender sicherzustellen, dass alle mit dem Wechsel des Objektivmoduls einhergehenden Änderungen berücksichtigt und umgesetzt werden, was durchaus aufwendig und mühsam sein kann. Ein anderes Objektivmodul kann selbst bei identischer Brennweite und Blende, beispielsweise durch unterschiedliche optische Eigenschaften, eine Veränderung der Programmeinstellungen einer nachgelagerten Bildverarbeitung oder Kameraparameter im Kamerasystem notwendig machen. Ein anderes damit verbundenes Problem liegt darin, dass ein Objektivmodul vom Anwender auch einfach verwechselt werden kann und es dadurch zu Fehlfunktionen des Machine Vision Systems kommen kann.

In vielen Anwendungen der industriellen Bildverarbeitung wird ein Objektiv mit fixem Fokus oder mit manuell verstellbarem Fokus verwendet. Bei der manuell verstellbaren Variante wird das Objektiv, oder die Linse im Objektiv, durch eine spezielle Mechanik, beispielsweise über einen verdrehbaren Verstellring, gegenüber dem Bildsensor im Kameramodul verschoben. Solche Objektive gehen ebenfalls aus der DE 10 2012 111 231 A1 und der WO 2010/081060 A1 hervor. Auch bekannt sind Lösungen, bei denen das Objektiv durch Heraus- oder Hineinschrauben des Anschlussgewindes in das Kameramodul oder auch durch das Verstellen mittels einer Gewindetrennung im Objektiv gegenüber dem Bildsensor verschoben wird, was ebenfalls einer Fokusverstellung gleichkommt. Die Position des Objektivs wird dabei z.B. mittels einer Gegenmutter oder einer Wurmschraube fixiert, um die Fokuseinstellung zu fixieren. Es sind auch Objektive mit motorisierter Fokusverstellung bekannt, wie z.B. aus der US 6,172,709 B1. Aufgrund der insbesondere für die industrielle Bildverarbeitung anzustrebenden geringen Baugröße der Objektive sind diese Lösungen allerdings sehr aufwendig. Dazu kommt, dass diese für eine häufige Fokusverstellung, wie es beispielsweise bei einem Autofokus in vielen Anwendungen der industriellen Bildverarbeitung mit typischerweise einigen tausend Bildern pro Minute notwendig wäre, aufgrund der benötigen Verstellgeschwindigkeiten und der geringen Lebensdauern nicht geeignet sind. Ein weiteres Problem der motorisierten Fokusverstellung ist die dafür notwendige elektrische Energieversorgung, die in der Regel über das Kameramodul und elektrische Kontakte realisiert wird.

Es sind auch Objektive für die industrielle Bildverarbeitung bekannt, bei denen Flüssiglinsen eingesetzt werden, die eine automatische Fokusverstellung, auch als Autofokus, ermöglichen. Das Problem bei Flüssiglinsen ist in erster Line die notwendige elektrische Energieversorgung der Flüssiglinsen und der Elektronik zur Ansteuerung der Flüssiglinse. Die elektrische Energieversorgung und die Ansteuerung erfolgt dabei durchwegs über das Kameramodul über elektrische Kontakte für die Energieversorgung und die Ansteuerung zwischen dem Kameramodul und dem Objektivmodul. Beispiele hierfür sind auch aus der DE 10 2012 111 231 A1 oder der WO 2010/081060 A1 bekannt. Dabei wird der elektrische Kontakt mit dem Kameramodul nachträglich hergestellt, beispielsweise im Falle eines Verbindungskabels, das nach dem Verbinden des Objektivs mit dem Kameramodul in vorgesehene Buchsen gesteckt wird. Beides macht aber entsprechende Vorkehrungen, wie Kontakte, Stecker, Buchsen, Kabel, usw., notwendig, was das Kamerasystem aufwendiger und fehleranfälliger macht. Häufig sind sogar mehrere Vorkehrungen gleichzeitig zu treffen, da es, aufgrund der Vielzahl von Anschlussmethoden für die Ansteuerung von Flüssiglinsen, selbst bei unterschiedlichen Objektivmodulen vom gleichen Hersteller keinen standardisierten Anschluss gibt. Elektrische Kontakte haben aber vor allem in Bereich der industriellen Bildverarbeitung auch den Nachteil der Gefahr der Verschmutzung von zugänglichen Kontakten in der industriellen Umgebung. Das bleibt auch dann ein Problem, wenn Stecker und Buchsen verwendet werden, wie z.B. in der DE 10 2012 111 231 A1 beschrieben.

Kameras aus dem Konsumgüterbereich, wie herkömmliche Foto- oder Videokameras, haben in der Regel Objektive mit Autofokusverstellung, wobei die elektrische Energie ebenfalls über elektrische Kontakte zwischen Kameramodul und Objektiv erfolgt. Diese Objektive sind in der Regel sehr komplex aufgebaut, teuer und haben aber in der Regel einen deutlich größeren Bauraum aufgrund anderer Anschlüsse. Auch ist die Anzahl der aufgenommenen Bilder innerhalb eines typischen Lebenszyklus bei diesen Kameras deutlich geringer als bei Anwendungen in der industriellen Bildverarbeitung, was mechanische Lösungen zur Fokusverstellung zulässt. Die obigen Probleme treten daher bei solchen Kameras nicht auf. In diesem Gebiet ist es aber in der Regel so, dass jeder Hersteller seinen eigenen Anschluss definiert hat, die zueinander nicht kompatibel sind. Kameras aus dem Konsumgüterbereich sind für die industrielle Bildverarbeitung aber auch deshalb ungeeignet, da solche Kameras nicht in industrietauglicher Ausführung vorliegen. Das bedeutet, dass sie weder den Anforderungen an die Umgebungsbedingungen genügen (Temperatur, Vibrationen, Dichtigkeitsanforderungen, usw.), noch, abgesehen von dem standardisierten Stativgewinde, geeignete Möglichkeiten für die mechanische Montage auf einer Maschine oder einem industrietauglichem Interface zur Kommunikation mit einem Steuergerät oder zu einer externen Peripherie, besitzen. Diese Kameras haben häufig weder eine Schnittstelle zur Rohbildübertragung auf eine externe Bildauswerteeinheit, noch bieten diese die Möglichkeit einer internen Bildverarbeitung auf der Kamera für Anwendungen der industriellen Bildverarbeitung. Zudem bieten solche Kameras in der Regel auch keine Möglichkeit der Triggerung oder Synchronisierung im für Industrieanwendungen häufig geforderten Mikrosekundenbereich. Aus diesen Gründen sind solche Kameras aus dem Konsumgüterbereich im Bereich der industriellen Bildverarbeitung kaum einsetzbar.

In der US 5,630,180 A ist eine Kamera ebenfalls aus dem Konsumgüterbereich beschrieben, die ein austauschbares Objektiv aufweisen. Im austauschbaren Objektiv sind in einer Speichereinheit Linsendaten hinterlegt, die von der Kamera auslesbar sind und die in der Kamera zur Korrektur der optischen Eigenschaften des Objektivs verwendet werden. Die Verbindung zwischen austauschbarem Objektiv und Kamera erfolgt wiederum jeweils über elektrische Kontakte mit allen oben genannten Nachteilen.

Korrekturen der Änderungen eines optischen Systems über die Zeit können aber auch ohne gespeicherte Linsendaten erfolgen, wie beispielsweise in der DE 10 2015 106 844 A1 für ein industrielles Bildverarbeitungssystem mit austauschbarer Linsenanordnung beschrieben. Die austauschbare Linsenanordnung umfasst dabei insbesondere eine variable Linse und eine Sammellinsenanordnung. Dabei wird der mit der Zeit auftretende optische Drift eines Sichtsystems mit der variablen Linse kompensiert. Die elektrische Verbindung zwischen Linsenanordnung und Kameramodul erfolgt über elektrische Kontakte, ebenfalls wieder mit allen oben genannten Nachteilen.

Die US 2007/0098385 A1 offenbart eine Digitalkamera mit einem Gehäuse und einem abnehmbaren Objektiv. Die Digitalkamera dient zur "normalen" Fotografie bei der das Objektiv am Gehäuse befestigt ist und zur "remote Fotografie", bei der das Objektiv vom Gehäuse entfernt ist. Um "remote Fotografie" zu ermöglichen ist der Bildsensor im Objektiv angeordnet. Wenn das Objektiv am Gehäuse befestigt ist werden die aufgenommen Bilder über eine serielle Verbindung drahtgebunden vom Objektiv an das Gehäuse übertragen. Der elektrische Kontakt erfolgt über Kontakte am Objektiv und Kontakte am Gehäuse. Es ergeben sich wiederum die bereits genannten Nachteile von Kameras aus dem Konsumgüterbereich mit elektrischen Kontakten.

Die WO 02/50757 A2 offenbart einen Transponder mit einem Datenspeicher zur Speicherung von Daten eines Objektes. Die Datenübertragung erfolgt unter dem Einfluss eines elektromagnetischen Feldes, bei entsprechend geringem Abstand. Zur temporären Erhöhung des möglichen Abstandes zur Datenübertragung ist eine Kupplung am Transponder vorgesehen, über welche der Transponder mit einer externen Energieversorgung, z.B. einer Batterie koppelbar ist, welche die Übertragungsleistung und damit den möglichen Abstand erhöht. Die Energieversorgung über die Kupplung erfolgt berührungslos mittels Antennen, die elektrisch voneinander getrennt sind.

Die US 2008/240709 A1 offenbart eine Digitalkamera mit einem Kameragehäuse und einem austauschbaren Objektiv. Im Objektiv sind Linsen und eine Speichereinheit vorgesehen. In der Speichereinheit sind Daten zur Korrektur von Abbildungsfehlern gespeichert. Im Kameragehäuse sind ein Bildsensor und eine Steuerungseinheit vorgesehen. Wie die Daten- und/oder Energieübertragung zwischen Kameragehäuse und Objektiv funktioniert, ist in der US 2008/240709 A1 nicht offenbart.Es ist eine Aufgabe der gegenständlichen Erfindung eine Kamera für die industrielle Bildverarbeitung, und ein zugehöriges Verfahren zum Betreiben einer Kamera für die industrielle

Bildverarbeitung, anzugeben, das die genannten Nachteile des Standes der Technik nicht aufweist.

Diese Aufgabe wird erfindungsgemäß gelöst, indem im Kameramodul ein Bildsensor zur Aufnahme eines Bildes und eine Kamerasteuereinheit zur Steuerung des Kameramoduls und/oder des Objektivmoduls vorgesehen sind und im Objektivmodul eine Speichereinheit mit Linsendaten vorgesehen ist, im Kameramodul und im Objektivmodul weiters zusammenwirkende drahtlose Nahfeldkommunikationseinheiten vorgesehen sind, wobei die Nahfeldkommunikationseinheit im Objektivmodul von der Nahfeldkommunikationseinheit im Kameramodul ausgesandte elektromagnetische Wellen in elektrische Energie zur Energieversorgung des Objektivmoduls umwandelt und das Kameramodul über die Nahfeldkommunikationseinheiten die Linsendaten ausliest und die Kamerasteuereinheit damit eine Funktion des Kameramoduls und/oder Objektivmoduls steuert. Die Aufgabe wird auch mit einem Verfahren gelöst, bei dem im Objektivmodul in einer Speichereinheit Linsendaten gespeichert werden, die über zusammenwirkende Nahfeldkommunikationseinheit im Objektivmodul und Kameramodul vom Kameramodul ausgelesen werden und in einer Kamerasteuereinheit im Kameramodul verwendet werden, um mit der Kamera ein Bild aufzunehmen und aus dem von der Nahfeldkommunikationseinheit im Kameramodul ausgesandten elektromagnetischen Wechselfeld elektrische Energie zur Energieversorgung des Objektivmoduls gewonnen wird.

Durch diese Maßnahmen können alle Nachteile, die mit elektrischen Kontakten am Kameramodul und Objektivmodul verbunden sind behoben werden. Da sowohl die Energieversorgung, als auch die Datenkommunikation zwischen Objektivmodul und Kameramodul über Nahfeldkommunikation, also somit drahtlos, übertragen wird, sind zwischen Objektivmodul und Kameramodul überhaupt keine elektrischen Kontakte erforderlich, die beispielsweise beim Wechseln des Objektives und/oder durch Umgebungseinflüssen geschädigt werden können. Zusätzlich ermöglicht die Speichereinheit im Objektivmodul Linsendaten zu speichern, die verwendet werden können, um eine Funktion des Objektivmoduls und/oder des Kameramoduls zu steuern.

Die Linsendaten können aber auch Daten beinhalten, die es ermöglichen, das Objektivmodul eindeutig zu identifizieren, womit eine Verwechslung von Objektivmodulen praktisch ausgeschlossen werden kann bzw. erkannt und angezeigt werden kann. Weiters können als Linsendaten auch Daten des optischen Systems des Objektivmoduls hinterlegt sein, die es ermöglichen, Kameraparameter oder Programmeinstellungen im Kameramodul, die zum Aufnehmen eines Bildes erforderlich sind, auch automatisiert einzustellen. Nicht zuletzt können als Linsendaten auch Korrekturdaten gespeichert werden, die es ermöglichen Abbildungsfehler des optischen Systems auszugleichen. Aber auch Betriebsdaten, die für einen Servicefall interessant sind, können in der Speichereinheit des Objektivmoduls gespeichert werden. So sind beispielsweise Daten zur maximalen Umgebungstemperatur, Schock oder Vibration oder der Betriebsdauer, wertvolle Informationen die das Objektivmodul entweder selbstständig oder über das Kameramodul in der Speichereinheit ablegen kann.

Wenn das Kameramodul auch eine Funktion des Objektivmoduls steuert, dann ist es vorteilhaft, wenn das Kameramodul Steuerdaten zum Steuern des Objektivmoduls über die Nahfeldkommunikationseinheiten an das Objektivmodul sendet. Damit werden auch für diese Datenübertragung keine elektrischen Kontakte benötigt.

Besonders vorteilhaft ist es auch, wenn aus den von der Nahfeldkommunikationseinheit im Kameramodul ausgesandte elektromagnetische Wellen elektrische Energie zur Energieversorgung einer fokusvariablen optischen Linse, z.B. eine Flüssiglinse, im Objektivmodul gewonnen wird. Das Objektivmodul benötigt dafür keine eigene Energieversorgung, was insbesondere auch die Handhabung der Objektivmodule vereinfacht.

Ganz besonders vorteilhaft ist es auch mit einem Sensor im Objektivmodul eine physikalische Größe im Umfeld des Objektivmoduls zu erfassen und die physikalische Größe zum Steuern einer Funktion des Objektivmoduls und/oder des Kameramoduls zu verwenden. Gleichfalls ist es vorteilhaft, wenn die physikalische Größe zur Korrektur einer Abhängigkeit der optischen Eigenschaften des Objektivmoduls von dieser physikalischen Größe verwendet wird. Mit einer dieser Maßnahmen ist die Kamera in der Lage sich selbsttätig auf unterschiedliche Einsatzorte und unterschiedliche Umgebungsbedingungen anzupassen, wodurch die Qualität der Bildaufnahme verbessert werden kann.

Zum Durchführen der Korrektur der Abhängigkeit können als Linsendaten einfach Korrekturdaten gespeichert werden, die auf einfache Weise über die Nahfeldkommunikation ausgelesen werden können.

Kameras für die industrielle Bildverarbeitung bieten aufgrund der gewünschten Kompaktheit wenig Bauraum, z.B. weil das Kameramodul und das Objektivmodul über eine genormte C-Mount, CS-Mount oder S-Mount Verbindung lösbar miteinander verbunden sind. Um trotzdem die benötigten Antennen für die Nahfeldkommunikation unterbringen zu können ist es vorteilhaft, wenn am Objektivmodul ein Linsenflansch vorgesehen ist, der das optische System des Objektivmoduls umgibt und der an einer Anlagefläche am Kameramodul anliegt, wobei am Linsenflansch eine Antennenanordnung der Nahfeldkommunikationseinheit des Objektivmoduls und an der Anlagefläche eine Antennenanordnung der Nahfeldkommunikationseinheit des Kameramoduls angeordnet sind. Hierbei ist es günstig, wenn die Antennenanordnung am Objektivmodul in einer Vertiefung des Linsenflansches angeordnet ist und/oder die Antennenanordnung an der Anlagefläche in einer Vertiefung der Anlagefläche angeordnet ist. Damit kann auf einfache Weise die Einhaltung des Auflagemaßes der Optik gewährleistet werden und dennoch eine ausreichend große Fläche für die Energieübertragung zur Verfügung gestellt werden. Bei Ausführungen mit geringerem Energiebedarf, beispielsweise wenn nur Daten aber keine Aktoren und/oder keine oder nur wenige Sensoren versorgt werden müssen, kann auch eine Stabantenne ausreichen um die erforderliche Energie zur Verfügung zu stellen.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 ein Kameramodul und ein Objektivmodul einer erfindungsgemäßen Kamera der industriellen Bildverarbeitung,
Fig.2 Komponenten des Kameramoduls und Objektivmoduls und
Fig.3 eine mögliche Ausführung der Verbindung zwischen Kameramodul und Objektivmodul.

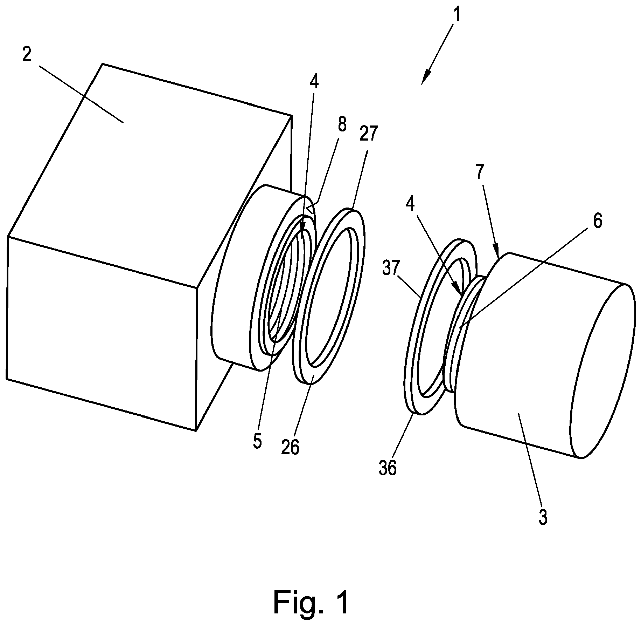

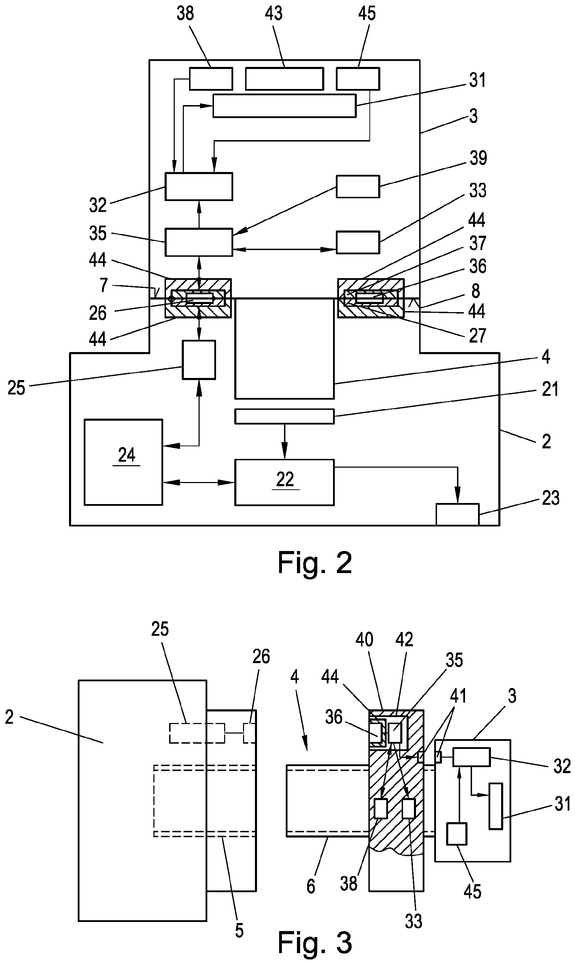

In Fig.1 ist eine erfindungsgemäße Kamera 1 (in Explosionsdarstellung) für die industrielle Bildverarbeitung gezeigt, das ein Kameramodul 2 und ein Objektivmodul 3 umfasst. Das Kameramodul 2 und das Objektivmodul 3 werden lösbar über einen standardisierten Anschluss 4, beispielsweise ein C-Mount oder S-Mount, verbunden. Der Anschluss 4 besteht beispielsweise aus einem Innengewinde 5 am Kameramodul 2 und ein entsprechendes Außengewinde 6 am Objektivmodul 3, welches in das Innengewinde 5 des Kameramoduls 2 geschraubt wird. Im Objektivmodul 3, bzw. im Gehäuse des Objektivmoduls 3, ist eine optische Linse, beispielsweise eine Linse mit festen Fokus oder fokusvariable Linse 31, wie z.B. eine Flüssiglinse, oder auch ein Linsensystem bestehend aus mehreren Linsen (auch gemischt aus Linsen mit festem und variablen Fokus), vorgesehen (siehe Fig.2). Im Kameramodul 2, bzw. im Gehäuse des Kameramoduls 2, ist ein Bildsensor 21 zur digitalen Aufnahme eines Bildes angeordnet. Zwischen dem Kameramodul 2 und dem Objektivmodul 3 gibt es keine elektrischen Kontakte, weder für die elektrische Energieversorgung, noch für eine Steuerverbindung.

Im Objektivmodul 3 ist gegebenenfalls eine Objektivsteuereinheit 32 zum Ansteuern der fokusvariablen Linse 31, wie der Flüssiglinse, angeordnet. Die Objektivsteuereinheit 32 dient der Verstellung der fokusvariablen Linse und damit der Verstellung des Fokus der Kamera 1. Bei einer Linse mit festem Fokus kann die Objektivsteuereinheit 32 unter Umständen entfallen bzw. muss die Objektivsteuereinheit 32 diese Funktionalität nicht aufweisen.

Es gibt verschiedene bekannte Ausführungen einer Flüssiglinse. Eine bekannte Variante verwendet zwei isodichte Flüssigkeiten, wie z.B. Öl und Wasser, die in der Linse eine Flüssigkeit-Flüssigkeit-Grenzfläche ausbilden. Durch Anlegen verschiedener elektrischer Spannungen an die Linse kann die Krümmung dieser Flüssigkeit-Flüssigkeit-Grenzfläche verändert werden, was wiederum zu einer Änderung der Brennweite der Linse führt. Eine andere bekannte Flüssiglinse verwendet eine bewegliche Membran, die ein Flüssigkeitsreservoir bedeckt, um den Linsenfokus zu variieren. Die Form der Membran wird mittels einer Spule durch Anlegen eines elektrischen Stromes verändert, um den Linsenfokus zu variieren. Das Verstellen des Fokus der Flüssiglinse erfolgt daher durch Anlegen einer elektrischen Spannung oder eines elektrischen Stromes.

Im Kameramodul 2 ist eine Bildverarbeitungseinheit 22 angeordnet, die die vom Bildsensor 21 aufgenommen digitalen Bilddaten verarbeitet und/oder auswertet. Das Ergebnis der Verarbeitung kann über eine Schnittstelle 23 ausgegeben werden. Die Schnittstelle 23 kann beispielsweise als Anschluss zu einem Datenbus ausgeführt sein. Über die Schnittstelle 23 könnten auch die Bilddaten selbst ausgegeben werden. In der Bildverarbeitungseinheit 22 ist daher geeignete Bildverarbeitungssoftware implementiert. In der Bildverarbeitungseinheit 22 können Bildvorverarbeitungsalgorithmen implementiert sein, mittels denen ein aufgenommenes Bild vorbearbeitet bzw. aufbereitet werden kann. Der für ein Machine Vision System notwendige Schritt der Auswertung der Bilddaten, beispielsweise um damit ein Maschine oder eine Anlage zu steuern, erfolgt dann in einer externen Einheit, beispielsweise in einer Steuereinheit der Maschine oder Anlage. Diese Auswertung der Bilddaten kann aber auch direkt in der Bildverarbeitungseinheit 22 erfolgen, wofür dann geeignete Algorithmen oder Applikationen implementiert sind - in diesem Fall spricht man auch häufig von einer Smart Kamera. Eine Smart Kamera übertragt daher Steuerdaten an eine Maschinen- oder Anlagensteuerung, um diese zu steuern. Im Kameramodul 2 ist auch eine Kamerasteuereinheit 24 angeordnet, die die Kamera 1 und gegebenenfalls auch eine Funktion des Objektivmoduls 3 steuert, beispielsweise durch Steuerung des Fokus oder einer Blendenverstellung.

Im Objektivmodul 3 ist weiters eine Speichereinheit 33 vorgesehen, in der Linsendaten, in der Art eines elektronischen Typenschilds, des optischen Systems gespeichert sind. Diese Linsendaten können insbesondere Daten zur eindeutigen Identifizierung eines Objektivmoduls 3, Daten betreffend das optische System bzw. der optischen Linse des Objektivmoduls 3 und Kalibrierdaten des Objektivmoduls 3 umfassen. Im Minimalfall ist eine Eigenschaft der Optik, bzw. der Linse, insbesondere die Brennweite und gegebenenfalls auch die Blende, bei einer verstellbaren Blende auch die minimale und maximale Blende, gespeichert. Beispiele für weitere Linsendaten sind eine Produktbezeichnung (Bestellnummer, Produktnummer), eine Seriennummer, eine Typenbezeichnung, freigegebene Hersteller vom Kameramodulen, der Verstellbereich der Brennweiten bei einer fokusvariablen Linse, eine unterstützte Bildsensordiagonale, die Abbildungsfehler einer Optik (wie z.B. die Vignettierung, die Verzeichnung, usw.), Korrekturdaten für Abbildungsfehler der Optik. Ebenso können bestimmte Linsenparameter, wie beispielsweise die Verzeichnung oder der Randabfall der Beleuchtung (relative Illumination), ermittelt und als Linsendaten hinterlegt werden.

Für den Betrieb des Objektivmoduls 3, insbesondere zum Auslesen der Linsendaten aus der Speichereinheit 33, ist elektrische Energie erforderlich. Ebenso ist eine Datenkommunikation zwischen Kameramodul 2 und Objektivmodul 3 notwendig, um die Linsendaten auslesen zu können. Sowohl die Energieversorgung, als auch die Datenkommunikation erfolgt erfindungsgemäß über Nahfeldkommunikation (NFC) zwischen Kameramodul 2 und Objektivmodul 3. Hierzu ist sowohl im Kameramodul 2, als auch im Objektivmodul 3 eine Nahfeldkommunikationseinheit 25, 35 angeordnet, die jeweils mit einer zugeordneten Antennenanordnung 26, 36 verbunden ist. Die Nahfeldkommunikation kann dabei sowohl aktiv-passiv, als auch aktiv-aktiv (Peer-To-Peer) ausgeführt sein. Die Nahfeldkommunikationseinheit 35 im Objektivmodul 3 gewinnt die zum Auslesen der Speichereinheit 33 notwendige Energie aus dem elektromagnetischen Wechselfeld der Nahfeldkommunikation, das vom Kameramodul 2 ausgestrahlt wird.

Die Linsendaten können damit vom Kameramodul 2 über die Nahfeldkommunikation ausgelesen werden, entweder direkt oder über die Objektivsteuereinheit 32. Diese Linsendaten können dann im Kameramodul 2 verwendet werden, um sicherzustellen, dass nur ein für das Kameramodul 2 geeignetes Objektivmodul 3 verwendet wird. Hierfür können beispielsweise die Typenbezeichnung, die Brennweite und/oder die Bildsensordiagonale verwendet werden. Auf diese Weise können Fehler in der Bilderfassung vermieden werden, die durch Unterschiede auch bei einem Objektivmodul 3 des gleichen Typs entstehen können. Sind diese Unterschiede bekannt, beispielsweise weil diese Unterschiede in der Speichereinheit 33 hinterlegt sind, können diese in der Bildverarbeitung in der Bildverarbeitungseinheit 22 berücksichtigt werden, oder das Bild auch schon vorher korrigiert werden. Dadurch wird vermieden, dass leichte Unterschiede zu sporadischen Fehlern in der industriellen Bildverarbeitung führen deren Ursprung schwer zuzuordnen bzw. feststellbar sind.

Als Linsendaten werden daher vorzugsweise auch Korrekturdaten für Abbildungsfehler des Objektivmoduls 3 (also des gesamte optischen Systems des Objektivmoduls 3) gespeichert. Die Abbildungsfehler bzw. die Korrekturdaten werden beispielsweise bei der Kalibrierung des Objektivmoduls 3 erfasst und z.B. in Form einer Abgleichtabelle in der Speichereinheit 33 gespeichert. Das Kameramodul 2 kann die Korrekturdaten auslesen, beispielsweise wenn ein neues Objektivmodul 3 am Kameramodul 2 befestigt wird, und kann dann die erfassten Bilddaten mit den Korrekturdaten korrigieren, was die Qualität der Bilderfassung verbessert. Für den Betrieb bzw. Verstellung einer fokusvariablen Linse 31, wie beispielsweise der Flüssiglinse, oder zum Verstellen einer verstellbaren Blende 43 im Objektivmodul 3 ist ebenfalls elektrische Energie erforderlich. Mittels der Datenkommunikation zwischen Kameramodul 2 und Objektivmodul 3 können gegebenenfalls auch Steuerbefehle an die Objektivsteuereinheit 32 zum Verstellen der fokusvariablen Linse 31 um den Fokus zu ändern und/oder zum Verstellen der Blende ausgetauscht werden. Beides erfolgt über Nahfeldkommunikation (NFC) zwischen Kameramodul 2 und Objektivmodul 3.

Für die Nahfeldkommunikation sind auch Antennen im Kameramodul 2 und im Objektivmodul 3 erforderlich. Die Antennenanordnung 26 des Kameramoduls 2 kann an einer Kameramodulanlagefläche 8 im Bereich des Anschlusses 4 angeordnet sein. Gleichfalls kann die Antennenanordnung 36 des Objektivmoduls 3 an einer Objektivmodulanlagefläche 7 im Bereich des Anschlusses 4 angeordnet sein. Die Kameramodulanlagefläche 8 und die Objektivmodulanlagefläche 7 sind dabei einander zugewandt angeordnet, sodass auch darauf angeordnete Antennenanordnungen 26, 36 einander zugewandt angeordnet sind. Die beiden Antennenanordnungen 26, 36 sind dabei natürlich zueinander ausgerichtet und möglichst nahe aneinander angeordnet, um eine gute induktive Kopplung für die Nahfeldkommunikation und die Energieversorgung zu ermöglichen. Es eigenen sich daher insbesondere einander zugewandte Oberflächen am Kameramodul 2 und Objektivmodul 3 für das Anbringen der Antennenanordnungen 26, 36. Durch die Antennenanordnungen 26, 36 wird das optisches System der Kamera 1 bevorzugt nicht verändert, insbesondere soll z.B. das Auflagemaß der Optik nicht beeinflusst werden. Die Antennenanordnungen 26, 36 werden daher vorzugsweise in Vertiefungen am Kameramodul 2 bzw. Objektivmodul 3 angeordnet. Eine Antennenanordnung 26, 36 ist vorzugsweise auf einer Leiterplatte 27, 37 aufgebracht, die in einer Vertiefung an einer Oberfläche des Objektivmoduls 3 oder Kameramoduls 2 eingesetzt ist. Eine Leiterplatte 27, 37 kann dabei auch als flexible Leiterplatte ausgeführt sein, was die Möglichkeiten der Anordnung erhöht. Das ermöglicht es die Antennenanordnungen 26, 36 bei vorgegebenen und unveränderten Anschluss 4 (Gewinde, Auflagemaß) möglichst nahe aneinander anzuordnen. Im gezeigten Ausführungsbeispiel nach Fig.2 sind die Antennenanordnungen 26, 36 auf ringförmigen Leiterplatten 27, 37 angeordnet und jeweils an einander zugewandten und aneinander liegenden Stirnflächen am Kameramodul 2 und Objektivmodul 3 angeordnet sind. Die Antennen der Antennenanordnungen 26, 36 sind bevorzugt als spiralförmige Leiter auf den Leiterplatten 27, 37 aufgebracht.

Eine Nahfeldkommunikationseinheit 25, 35 mit zugehöriger Antennenanordnung 26, 36 kann auch in einem eigenen abgeschlossenen Gehäuse angeordnet sein (ein sogenannter Transponder Inlay 42 oder RFID Chip), das dann in eine entsprechende Ausnehmung am Kameramodul 2 oder Objektivmodul 3 eingesetzt werden kann. Die Antennenanordnung 26, 36 eines solchen Transponder Inlays 42 reduziert sich dabei natürlich auf die Größe des Transponder Inlays 42. Wenn ein Transponder Inlay 42 im Objektivmodul 3 verwendet wird, dann ist am Kameramodul 2 beispielsweise eine Stummelantenne oder Stabantenne entsprechender Größe gegenüber dem Transponder Inlay ausreichend. Ein Transponder Inlay 42 bietet oftmals auch eine integrierte Speichereinheit 33, die zum Speichern von Linsendaten verwendet werden kann. In diesem Fall kann unter Umständen auch auf eine separate, zusätzliche Speichereinheit im Objektivmodul 3 verzichtet werden. Es ist aber ebenso denkbar, sowohl eine Speichereinheit im Transponder Inlay und eine zusätzliche Speichereinheit im Objektivmodul 3 als Speichereinheit 33 im Objektivmodul 3 zu nutzen. Beispiele für solche Transponder Inlays 42 sind ein NeoTAG® Inlay der Industria Oberländer Ingenieur-GmbH & Co. KG oder ein RUD-ID-Point® der RUD Ketten Rieger & Dietz GmbH u. Co. KG. Solche Transponder Inlay 42 biete vor allem den Vorteil der sehr kompakten Baugröße, was diese für den Einsatz in einem Objektivmodul 3 besonders geeignet machen.

Eine Kamera 1 für die industrielle Bildverarbeitung ist vorzugsweise robust auszuführen, weshalb das Gehäuse des Kameramoduls 2 und/oder Objektivmoduls 3 häufig aus Metall gefertigt ist. Um eine negative Beeinflussung der Nahfeldkommunikation durch metallische Oberflächen zu verringern, kann auch eine Abschirmung, beispielsweise in Form einer Ferritfolie oder einer Ferritschale 44, zwischen einer Antennenanordnung 26, 36 und dem Gehäuse des Kameramoduls 2 bzw. Objektivmoduls 3 vorgesehen sein.

Auch andere einander zugewandte Oberflächen am Kameramodul 2 und Objektivmodul 3 eignen sich für die Anbringung der Antennenanordnungen 26, 36. Beispielsweise könnten die Antennenanordnungen 26, 36 auch im Bereich der Gewinde 5, 6 des Anschlusses 4 vorgesehen sein.

Die Kamerasteuereinheit 24 des Kameramoduls 2 und die Objektivsteuereinheit 32 des Objektivmoduls 3 sind daher in der Lage, über die Nahfeldkommunikationseinheiten 25, 35 und die zugehörigen Antennenanordnungen 26, 36 miteinander zu kommunizieren und Daten auszutauschen. Das ermöglicht es insbesondere auch, die eine fokusvariable Linse des Objektivmoduls 3 über das Kameramodul 2 anzusteuern oder eine verstellbare Blende 43 des Objektivmoduls 3 zu verstellen. Damit kann sogar über die Kamerasteuereinheit 24 und die Auswertung der Bilddaten in der Bildverarbeitungseinheit 22 eine Autofokusfunktion realisiert werden.

Die elektrische Energie zum Betreiben des Objektivmoduls 3, zusätzlich zum Auslesen der Speichereinheit 33, kann ebenfalls von der Nahfeldkommunikation gewonnen werden. Die Energie des von der Nahfeldkommunikationseinheit 25 des Kameramoduls 2 über die Antennenanordnung 26 ausgestrahlten elektromagnetischen Wechselfeldes kann in der Nahfeldkommunikationseinheit 35 des Objektivmoduls 3 auch in elektrische Energie umgewandelt werden (Energy Harvesting Funktion der Nahfeldkommunikation) und zum Betreiben des Objektivmoduls 3 genutzt werden. Nachdem das Objektivmodul 3 zum Betreiben nur sehr wenig elektrische Energie benötigt, ist die aus der Nahfeldkommunikation gewonnene elektrische Energie dafür ausreichend. Damit benötigt das Objektivmodul 3 keinen elektrischen Anschluss für eine zusätzliche elektrische Energieversorgung. Selbstverständlich kann auch ein Transponder Inlay 42 bei entsprechend kleinem Abstand zwischen den zugeordneten Antennenanordnungen 26, 36 für ein Energy Harvesting herangezogen werden.

Am Objektivmodul 3 kann auch zumindest ein Sensor 38 vorgesehen sein, der eine physikalische Größe im Umfeld des Objektivmoduls 3, wie beispielsweise eine Temperatur, etc., erfasst.

Der Sensor 38 kann ebenfalls über die Nahfeldkommunikationseinheit 35 vom Kameramodul 2 ausgelesen werden und das Kameramodul 2 kann die gelieferten Sensorwerte zur Steuerung der Kamera 1 nutzen. Das Auslesen des Sensors 38 kann direkt über die Nahfeldkommunikationseinheit 35 oder auch indirekt über die Objektivsteuereinheit 32 (wie in Fig.2) erfolgen. Beispielsweise könnte eine Beleuchtungseinheit eines Machine Vision Systems zur industriellen Bildverarbeitung über die erfasste Umgebungstemperatur gesteuert werden. Dazu kann auch vorgesehen sein, dass ein Sensorwert über die Schnittstelle 23 ausgegeben wird.

Eine fokusverstellbare Linse 31, wie beispielsweise eine Flüssiglinse, kann in ihren optischen Eigenschaften von der Temperatur abhängig sein, wobei die Temperaturabhängigkeit in der Regel bekannt ist, z.B. durch Vermessen oder durch eine Herstellerangabe. Es könnten somit temperaturabhängige Korrekturen vorgenommen werden, wie z.B. ein Ausgleich einer möglichen temperaturabhängigen Veränderung der optischen Eigenschaften einer fokusvariablen Linse 31. Die Temperatur wird dazu vorzugsweise in der Nähe der Linse gemessen, beispielsweise durch einen Sensor 38, der im Objektivmodul 3 in der Nähe der Linse 31 angeordnet sein kann. Die Temperaturabhängigkeit könnte dabei ebenfalls in der Speichereinheit 33 als Linsendaten gespeichert sein, beispielsweise als geeignetes Kennfeld. Eine temperaturabhängige Korrektur könnte dabei im Objektivmodul 3 realisiert sein, beispielsweise in der Objektivsteuereinheit 32. Wenn die Korrektur direkt im Objektivmodul 3 erfolgt, dann besteht natürlich keine Notwendigkeit, die diesbezüglichen Linsendaten vom Kameramodul 2 auszulesen. Ebenso könnte eine solche temperaturabhängige Korrektur auch im Kameramodul 2 implementiert sein, beispielsweise in der Kamerasteuereinheit 24, mit der das optische System gesteuert wird. Ferner ist es auch denkbar, die temperaturabhängige Korrektur nachträglich im Kameramodul 2 über die Bildverarbeitung in der Bildverarbeitungseinheit 22 vorzunehmen, sofern es sich bei diesen temperaturabhängigen Fehlern um Fehler handelt, die über Software korrigiert werden können.

Im Objektivmodul 3 kann auch ein Lagesensor 39 vorgesehen sein, der z.B. den Raumwinkel zur Normale der Erdanziehungskraft erfasst, vorgesehen sein. Damit kann beispielsweise die Lage des Kameramoduls 2 bzw. des Objektivmoduls 3 im Raum festgestellt, eingestellt (auch automatisiert) und überwacht werden. Der Lagesensor 39 kann auch als Gyrosensor ausgeführt sein, oder einen Gyrosensor beinhalten, um neben einer linearen Beschleunigung auch eine Winkelbeschleunigung erfassen zu können. Der Lagesensor 39 kann so auch bei einer sich bewegenden Kamera 1, beispielsweise bei der Montage auf einem Roboterarm, die Lage im Raum immer korrekt bestimmen. Gleichfalls könnten damit auch lage- bzw. beschleunigungsabhängige Korrekturen vorgenommen werden. Die Eigenschaften einer fokusvariablen Linse 31, wie z.B. einer Flüssiglinse, können beispielsweise auch von der Einbaulage oder einer zugeführten externen Beschleunigung (z.B. als zweifache zeitliche Ableitung der Lage oder auch mittels eines Beschleunigungssensors erfasst) abhängig sein, da die Beschleunigung einen sogenannten Komafehler verursachen kann. Diese Abhängigkeit ist dabei in der Regel bekannt, z.B. durch Vermessen oder durch eine Herstellerangabe, und können daher als Linsendaten hinterlegt, ausgelesen und berücksichtigt werden. Analog wie bei den temperaturabhängigen Korrekturen können auch lage- bzw. beschleunigungsabhängige Korrekturen im Objektivmodul 3 oder im Kameramodul 2 durch Ansteuerung des optischen Systems, oder per Software in der Bildverarbeitungseinheit 22 erfolgen.

Der Lagesensor 39 kann ebenfalls über die Nahfeldkommunikationseinheit 35 vom Kameramodul 2 ausgelesen werden und das Kameramodul 2 kann die gelieferten Sensorwerte zur Steuerung der Kamera 1 nutzen oder über die Schnittstelle 23 ausgeben. Das Auslesen des Lagesensor 39 kann direkt über die Nahfeldkommunikationseinheit 35 (wie in Fig.2) oder auch indirekt über die Objektivsteuereinheit 32 erfolgen.

Neben Temperatur und Lage, bzw. Beschleunigung, können natürlich auch noch andere physikalische Größen im Umfeld des Objektivmoduls erfasst werden, wie beispielsweise die relative Feuchtigkeit in der Umgebung, da sich das optische System oder ein Teil davon auch in Abhängigkeit davon verändern kann. Eine solche physikalische Größe könnte dann wiederum zum Steuern einer Funktion des Objektivmoduls 3 und/oder des Kameramoduls 2 oder zur Korrektur einer Abhängigkeit der optischen Eigenschaften des Objektivmoduls 3 von dieser physikalischen Größe verwendet werden.

Ebenso kann im Objektivmodul 3 ein Abstandssensor 45 vorgesehen sein, der den Abstand des Objektivmoduls 3 zu einer Referenzebene misst. Zusammen mit dem Lagesensor 39 kann die relative Position des Objektivmoduls 3 im Raum bezogen auf eine Referenzebene überprüft werden (z.B. im Kameramodul 2 oder in einer damit verbundenen Maschinen- oder Anlagensteuerung), was beispielsweise zum Einrichten eines Machine Vision Systems verwendet werden kann. Der Abstandssensor 45 kann auch dazu verwendet werden, die Bildaufnahme und/oder eine Beleuchtung der industriellen Bildverarbeitung zu steuern.

Der Abstandssensor 45 kann ebenfalls über die Nahfeldkommunikationseinheit 35 vom Kameramodul 2 ausgelesen werden und das Kameramodul 2 kann die gelieferten Sensorwerte zur Steuerung der Kamera 1 nutzen. Das Auslesen des Abstandssensor 45 kann direkt über die Nahfeldkommunikationseinheit 35 oder auch indirekt über die Objektivsteuereinheit 32 (wie in Fig.2) erfolgen.

Der Sensor 38 und/oder der Lagesensor 39 und/oder der Abstandssensor 45 könnte auch oder auch zusätzlich im Kameramodul 2 verbaut sein, wobei die Sensorwerte dann z.B. direkt von der Kamerasteuereinheit 24 oder der Bildverarbeitungseinheit 22 auslesbar sind. Ebenso könnte der Sensor 38 und/oder der Lagesensor 39 und/oder der Abstandssensor 45 auch oder auch zusätzlich an anderer geeigneter, dem Objektivmodul 3 aber eindeutig zugeordneten Stelle verbaut sein, beispielsweise an einer an der Kamera 1 fest verbauten Beleuchtungseinheit. Das Auslesen von derart verbauten Sensoren könnte z.B. wieder mittels Nahfeldkommunikation erfolgen oder über eine feste Verdrahtung.

Bei sehr kleinen Objektivmodulen 3, beispielsweise im Falle eines S-Mount, kann die verfügbare Baugröße unter Umständen nicht ausreichen, um die für die Nahfeldkommunikation benötigten Elemente direkt am Objektivmodul 3 anzuordnen. Insbesondere in diesem Fall kann am Objektivmodul 3 ein Transponder Inlay verwendet werden. Ebenso kann ein Erweiterungsring 40 vorgesehen sein, wie in Fig.3 dargestellt, der auf das Gewinde 6 des Anschlusses 4 des Objektivmoduls 3 geschraubt wird. Am Erweiterungsring 40 kann die Antennenanordnung 36 und die zugehörige Nahfeldkommunikationseinheit 35 des Objektivmoduls 3 angeordnet sein, z.B. als Transponder Inlay 42 ausgeführt, wie in Fig.3. Ebenso könnten auch Antennenanordnungen 26, 36, die auf ringförmigen Leiterplatter 27, 37 angeordnet und jeweils an einander zugewandten und aneinander liegenden Stirnflächen am Kameramodul 2 und Objektivmodul 3 angeordnet sind, wie in Fig.2 dargestellt, vorgesehen sein. Kann, beispielsweise durch die großflächige Verbindung der ringförmigen Anordnung, ausreichend elektrische Energie, z.B. für die Ansteuerung von Aktoren, zur Verfügung gestellt werden, kann über eine geeignete, zusammenwirkende elektrische Verbindung 41 am Objektivmodul 3 und am Erweiterungsring 40 die Verbindung zur Objektivsteuereinheit 32 und in weiterer Folge zur fokusvariable Linse 31 und zu einem Sensor 38, bzw. auch zu einem Lagesensor 39 oder Abstandssensor 45, bereits bei der Herstellung des Objektivmoduls 3 umgesetzt werden. Die elektrische Verbindung 41 könnte dabei auch als unlösbare Verbindung ausgeführt werden. Der Erweiterungsring 40 und das Objektivmodul 3 können dann gemeinsam in das Kameramodul 2 geschraubt werden. Zwischen Kameramodul 2 und Objektivmodul 3 (mit Erweiterungsring 40) sind dann nachwievor keinerlei elektrischen Kontakte in Form von Steckverbindungen erforderlich.

Aber auch Betriebsdaten, die für einen Servicefall interessant sind, können in der Speichereinheit 33 des Objektivmoduls 3, oder des Erweiterungsrings 40, gespeichert werden. So sind beispielsweise Daten zur maximalen Umgebungstemperatur, Schock oder Vibration oder der Betriebsdauer, die beispielsweise von den verbauten Sensoren im Objektivmodul 3 gewonnen werden können, wertvolle Informationen. Solche Betriebsdaten können vom Objektivmodul 3 entweder selbstständig, beispielsweise über die Objektivsteuereinheit 32, oder über das Kameramodul 2 und der Nahfeldkommunikationseinheit 35, in der Speichereinheit 33 des Objektivmodul 3 Optik ablegt oder ausgelesen werden und können beispielsweise vom Kameramodul 2 an einer Anzeige ausgegeben werden oder über die Schnittstelle 23 auslesbar sein.

## Patentansprüche

1. Kamera für die industrielle Bildverarbeitung mit einem Kameramodul (2) und einem lösbar damit verbundenen Objektivmodul (3) mit einem optischen System mit zumindest einer optischen Linse, weiters sind im Kameramodul (2) ein Bildsensor (21) zur Aufnahme eines Bildes und eine Kamerasteuereinheit (24) zur Steuerung des Kameramoduls (2) und/oder des Objektivmoduls (3) vorgesehen und im Objektivmodul (3) ist eine Speichereinheit (33) mit Linsendaten vorgesehen **dadurch gekennzeichnet dass** im Kameramodul (2) und im Objektivmodul (3) zusammenwirkende drahtlose Nahfeldkommunikationseinheiten (25, 35) vorgesehen sind, wobei die Nahfeldkommunikationseinheit (35) ein im Objektivmodul (3) von der Nahfeldkommunikationseinheit (25) im Kameramodul (2) ausgesandtes elektromagnetisches Wechselfeld in elektrische Energie zur Energieversorgung des Objektivmoduls (3) umwandelt **und dass** das Kameramodul (2) über die Nahfeldkommunikationseinheiten (25, 35) die Linsendaten ausliest und die Kamerasteuereinheit (24) damit eine Funktion des Kameramoduls (2) und/oder des Objektivmoduls (3) steuert.

2. Kamera nach Anspruch 1, **dadurch gekennzeichnet, dass** das Kameramodul (2) Steuerdaten zum Steuern des Objektivmoduls (3) über die Nahfeldkommunikationseinheiten (25, 35) an das Objektivmodul (3) sendet.

3. Kamera nach Anspruch 1 oder 2, **dadurch gekennzeichnet, dass** im Objektivmodul (3) eine fokusvariable optische Linse (31), vorzugsweise eine Flüssiglinse, vorgesehen ist, wobei die Nahfeldkommunikationseinheit (35) im Objektivmodul das von der Nahfeldkommunikationseinheit (35) im Kameramodul (2) ausgesandte elektromagnetische Wechselfeld in elektrische Energie zur Energieversorgung der Verstellung der fokusvariablen optischen Linse umwandelt

4. Kamera nach Anspruch 1 oder 2, **dadurch gekennzeichnet, dass** im Objektivmodul (3) eine verstellbare Blende (43) vorgesehen ist, wobei die Nahfeldkommunikationseinheit (35) im Objektivmodul (3) das von der Nahfeldkommunikationseinheit (25) im Kameramodul (2) ausgesandte elektromagnetische Wechselfeld in elektrische Energie zur Energieversorgung der Verstellung der verstellbaren Blende (43) umwandelt.

5. Kamera nach einem der Ansprüche 1 bis 4, **dadurch gekennzeichnet, dass** im Objektivmodul (3) eine Objektivsteuereinheit (32) vorgesehen ist, die mit der Nahfeldkommunikationseinheit (35) im Objektivmodul (3) verbunden ist, wobei die Objektivsteuereinheit (32) über Nahfeldkommunikation Steuerbefehle vom Kameramodul (2) erhält.

6. Kamera nach einem der Ansprüche 1 bis 3, **dadurch gekennzeichnet, dass** am Objektivmodul (3) eine Objektivmodulanlagefläche (7) vorgesehen ist, die einer Kameramodulanlagefläche (8) am Kameramodul (2) zugewandt ist, wobei an der Objektivmodulanlagefläche (7), oder in einer Vertiefung der Objektivmodulanlagefläche (7), eine Antennenanordnung (36) der Nahfeldkommunikationseinheit (35) des Objektivmoduls (3) und an der Kameramodulanlagefläche (8), oder in einer Vertiefung der Kameramodulanlagefläche (8), eine Antennenanordnung (26) der Nahfeldkommunikationseinheit (25) des Kameramoduls (2) angeordnet sind.

7. Kamera nach einem der Ansprüche 1 bis 6, **dadurch gekennzeichnet, dass** im Objektivmodul (3) und/oder im Kameramodul (2) zumindest ein Sensor zur Erfassung einer physikalischen Größe im Umfeld der Kamera (1) angeordnet ist.

8. Kamera nach Anspruch 7, **dadurch gekennzeichnet, dass** die Nahfeldkommunikationseinheit (35) im Objektivmodul (3) das von der Nahfeldkommunikationseinheit (25) im Kameramodul (2) ausgesandte elektromagnetische Wechselfeld in elektrische Energie zum Betreiben und Auslesen des Sensors umwandelt.

9. Kamera nach Anspruch 7 oder 8, **dadurch gekennzeichnet, dass** als Sensor ein Temperatursensor (38) oder als Sensor ein Lagesensor (39) und/oder ein Abstandssensor (45) angeordnet ist.

10. Kamera nach Anspruch 9, **dadurch gekennzeichnet, dass** in den Linsendaten Korrekturdaten zum Korrigieren einer Temperaturabhängigkeit des optischen Systems des Objektivmoduls (3) oder in den Linsendaten Korrekturdaten zum Korrigieren einer Lageabhängigkeit und/oder Beschleunigungsabhängigkeit und/oder Abstandsabhängigkeit des optischen Systems des Objektivmoduls (3) gespeichert sind.

11. Kamera nach Anspruch 10, **dadurch gekennzeichnet, dass** die Korrektur der Temperaturabhängigkeit oder die Korrektur der Lageabhängigkeit und/oder Beschleunigungsabhängigkeit und/oder Abstandsabhängigkeit im Objektivmodul (3) oder im Kameramodul (2) implementiert ist.

12. Kamera nach einem der Ansprüche 1 bis 11, **dadurch gekennzeichnet, dass** in den Linsendaten Daten zur eindeutigen Identifizierung des Objektivmoduls (3) und/oder Daten zum optischen System des Objektivmoduls (3) und/oder Kalibrierdaten des Objektivmoduls (3) gespeichert sind..

13. Verfahren zum Betreiben einer Kamera (1) für die industriellen Bildverarbeitung, wobei die Kamera (1) ein Kameramodul (2) und ein lösbar damit verbundenes Objektivmodul (3) mit einem optischen System mit zumindest einer optischen Linse aufweist, weiters werden im Objektivmodul (3) in einer Speichereinheit (33) Linsendaten gespeichert, **gekennzeichnet dadurch dass** die Linsendaten über zusammenwirkende Nahfeldkommunikationseinheiten (25, 35) im Objektivmodul (3) und Kameramodul (2) vom Kameramodul (2) ausgelesen werden und in einer Kamerasteuereinheit (24) im Kameramodul (2) verwendet werden, um mit der Kamera (1) ein Bild aufzunehmen **und dass** aus dem von der Nahfeldkommunikationseinheit (25) im Kameramodul (2) ausgesandte elektromagnetischen Wechselfeld elektrische Energie zur Energieversorgung des Objektivmoduls (3) gewonnen wird.

14. Verfahren nach Anspruch 13, **dadurch gekennzeichnet, dass** das Kameramodul (2) Steuerdaten zum Steuern des Objektivmoduls (3) über die Nahfeldkommunikationseinheiten (25, 35) an das Objektivmodul (3) sendet.

15. Verfahren nach einem der Ansprüche 13 oder 14, **dadurch gekennzeichnet, dass** mit einem Sensor (38) im Objektivmodul (3) eine physikalische Größe im Umfeld des Objektivmoduls (3) erfasst wird und die physikalische Größe zum Steuern einer Funktion des Objektivmoduls (3) und/oder des Kameramoduls (2) und/oder zur Korrektur einer Abhängigkeit der optischen Eigenschaften des Objektivmoduls (3) von dieser physikalischen Größe verwendet wird.

16. Verfahren nach Anspruch 15, **dadurch gekennzeichnet, dass** in den Linsendaten Korrekturdaten zum Durchführen der Korrektur der Abhängigkeit und/oder Daten zur eindeutigen Identifizierung des Objektivmoduls (3) und/oder Daten zum optischen System des Objektivmoduls (3) und/oder Kalibrierdaten des Objektivmoduls (3) gespeichert werden.

17. Verfahren nach einem der Ansprüche 13 bis 16, **dadurch gekennzeichnet, dass** aus dem von der Nahfeldkommunikationseinheit (25) im Kameramodul (2) ausgesandten elektromagnetischen Wechselfeld elektrische Energie zur Energieversorgung einer fokusvariablen optischen Linse (31) und/oder einer verstellbaren Blende (43) im Objektivmodul (3) und/oder des Sensors (38) gewonnen wird.

## Claims

1. A camera for industrial image processing, comprising a camera module (2) and an objective module (3) that is releasably connected thereto and has an optical system having at least one optical lens, further an image sensor (21) for capturing an image and a camera control unit (24) for controlling the camera module (2) and/or the objective module (3) are provided in the camera module (2), and a storage unit (33) having lens data is provided in the objective module (3), **characterized in that** interacting wireless near field communication units (25, 35) are provided in the camera module (2) and in the objective module (3), wherein the near field communication unit (35) in the objective module (3) converts an electromagnetic alternating field emitted from the near field communication unit (25) in the camera module (2) into electrical energy for supplying energy to the objective module (3) **and that** the camera module (2) reads the lens data out via the near field communication units (25, 35) and the camera control unit (24) controls therewith a function of the camera module (2) and/or of the objective module (3).

2. The camera according to claim 1, **characterized in that** the camera module (2) sends control data for controlling the objective module (3) to the objective module (3) via the near field communication units (25, 35).

3. The camera according to claim 1 or 2, **characterized in that** a variable-focus optical lens (31), preferably a liquid lens, is provided in the objective module (3), wherein the near field communication unit (35) in the objective module converts the electromagnetic alternating field emitted from the near field communication unit (35) in the camera module (2) into electrical energy for supplying energy for the adjustment of the variable-focus optical lens.3

4. The camera according to claim 1 or 2, **characterized in that** an adjustable aperture (43) is provided in the objective module (3), wherein the near field communication unit (35) in the objective module (3) converts the electromagnetic alternating field emitted from the near field communication unit (25) in the camera module (2) into electrical energy for supplying energy for the adjustment of the adjustable aperture (43).

5. The camera according to any of claims 1 to 4, **characterized in that** an objective control unit (32) that is connected to the near field communication unit (35) in the objective module (3) is provided in the objective module (3), wherein the objective control unit (32) receives control commands from the camera module (2) via near field communication.

6. The camera according to any of claims 1 to 3, **characterized in that** an objective module abutment surface (7) is provided on the objective module (3), that faces a camera module abutment surface (8) on the camera module (2),wherein an antenna arrangement (36) of the near field communication unit (35) of the objective module (3) is arranged on the objective module abutment surface (7) or in a depression of the objective module abutment surface (7) and an antenna arrangement (26) of the near field communication unit (25) of the camera module (2) is arranged on the camera module abutment surface (8) or in a depression of the camera module abutment surface (8).

7. The camera according to any of claims 1 to 6, **characterized in that** at least one sensor for detecting a physical quantity in the environment of the camera (1) is arranged in the objective module (3) and/or in the camera module (2).

8. The camera according to claim 7, **characterized in that** the near field communication unit (35) in the objective module (3) converts the electromagnetic alternating field emitted from the near field communication unit (25) in the camera module (2) into electrical energy for operating and reading out from the sensor.

9. The camera according to claim 7 or 8, **characterized in that** a temperature sensor (38) or a position sensor (39) and/or a distance sensor (45) is/are arranged as a sensor.

10. The camera according to claim 9, **characterized in that** correction data for correcting a temperature dependency of the optical system of the objective module (3) is stored in the lens data or correction data for correcting a position dependency and/or acceleration dependency and/or distance dependency of the optical system of the objective module (3) is stored in the lens data.

11. The camera according to claim 10, **characterized in that** the correction of the temperature dependency or the correction of the position dependency and/or acceleration dependency and/or distance dependency is implemented in the objective module (3) or in the camera module (2).

12. The camera according to any of claims 1 to 11, **characterized in that** data for uniquely identifying the objective module (3) and/or data on the optical system of the objective module (3) and/or calibration data on the objective module (3) is stored in the lens data.

13. A method for operating a camera (1) for industrial image processing, wherein the camera (1) comprises a camera module (2) and an objective module (3) that is releasably connected thereto and has an optical system having at least one optical lens, further lens data is stored in a storage unit (33) in the objective module (3), **characterized in that** the lens data is read out from the camera module (2) via interacting near field communication units (25, 35) in the objective module (3) and camera module (2), the lens data being used in a camera control unit (24) in the camera module (2) in order to capture an image with the camera (1) **and that** electrical energy for supplying energy to the objective module (3) is obtained from the electromagnetic alternating field emitted from the near field communication unit (25) in the camera module (2).

14. The method according to claim 13, **characterized in that** the camera module (2) sends control data for controlling the objective module (3) to the objective module (3) via the near field communication units (25, 35).

15. The method according to claim 13 or 14, **characterized in that** a physical quantity in the vicinity of the objective module (3) is detected with a sensor (38) in the objective module (3), and the physical quantity is used to control a function of the objective module (3) and/or of the camera module (2) and/or to correct a dependency of the optical properties of the objective module (3) on this physical quantity.

16. The method according to claim 15, **characterized in that** correction data for correcting the dependency and/or data for uniquely identifying the objective module (3) and/or data on the optical system of the objective module (3) and/or calibration data of the objective module (3) is stored in the lens data.

17. The method according to any of the claims 13 to 16, **characterized in that** electrical energy for supplying energy to a variable-focus optical lens (31) and/or an adjustable aperture (43) in the objective module (3) and/or the sensor (38) is obtained from the electromagnetic alternating field emitted from the near field communication unit (25) in the camera module (2).

## Revendications

1. Caméra pour le traitement industriel d'images, comprenant un module de caméra (2) et un module d'objectif (3) relié de manière amovible à celui-ci et doté d'un système optique comportant au moins une lentille optique, en outre, un capteur d'image (21) pour l'enregistrement d'une image et une unité de commande de caméra (24) pour la commande du module de caméra (2) et/ou du module d'objectif (3) sont prévus dans le module de caméra (2), et une unité de stockage (33) comportant des données de lentille est prévue dans le module d'objectif (3), **caractérisée en ce que** des unités de communication sans fil en champ proche (25, 35) coopérantes sont prévues dans le module de caméra (2) et dans le module d'objectif (3), l'unité de communication en champ proche (35) convertissant un champ électromagnétique alternatif émis dans le module d'objectif (3) par l'unité de communication en champ proche (25) dans le module de caméra (2) en énergie électrique pour l'alimentation en énergie du module d'objectif (3), **et en ce que** le module de caméra (2) lit les données de lentille par l'intermédiaire des unités de communication en champ proche (25, 35) et l'unité de commande de caméra (24) commande ainsi le fonctionnement du module de caméra (2) et/ou du module d'objectif (3).

2. Caméra selon la revendication 1, **caractérisée en ce que** le module de caméra (2) envoie, au module d'objectif (3), des données de commande pour la commande du module d'objectif (3), par l'intermédiaire des unités de communication en champ proche (25, 35).

3. Caméra selon la revendication 1 ou 2, **caractérisée en ce qu'**une lentille optique à focale variable (31), de préférence une lentille liquide, est prévue dans le module de lentille (3), l'unité de communication en champ proche (35) dans le module de lentille convertissant le champ électromagnétique alternatif émis par l'unité de communication en champ proche (35) dans le module de caméra (2) en énergie électrique pour l'alimentation en énergie du réglage de la lentille optique à focale variable.

4. Caméra selon la revendication 1 ou 2, **caractérisée en ce qu'**un diaphragme réglable (43) est prévu dans le module d'objectif (3), l'unité de communication en champ proche (35) dans le module d'objectif (3) convertissant le champ électromagnétique alternatif émis par l'unité de communication en champ proche (25) dans le module de caméra (2) en énergie électrique pour l'alimentation en énergie du réglage du diaphragme réglable (43).

5. Caméra selon l'une des revendications 1 à 4, **caractérisée en ce qu'**une unité de commande d'objectif (32) est prévue dans le module d'objectif (3), laquelle unité de commande d'objectif est reliée à l'unité de communication en champ proche (35) dans le module d'objectif (3), l'unité de commande d'objectif (32) recevant des instructions de commande du module de caméra (2) par l'intermédiaire de la communication en champ proche.

6. Caméra selon l'une des revendications 1 à 3, **caractérisée en ce qu'**une surface de contact de module d'objectif (7) est prévue au niveau du module d'objectif (3), laquelle surface de contact de module d'objectif est orientée vers une surface de contact de module de caméra (8) au niveau du module de caméra (2), un dispositif d'antenne (36) de l'unité de communication en champ proche (35) du module d'objectif (3) étant disposé sur la surface de contact de module d'objectif (7) ou dans un évidement de la surface de contact de module d'objectif (7), et un dispositif d'antenne (26) de l'unité de communication en champ proche (25) du module de caméra (2) étant disposé sur la surface de contact de module de caméra (8) ou dans un évidement de la surface de contact de module de caméra (8).

7. Caméra selon l'une des revendications 1 à 6, **caractérisée en ce qu'**au moins un capteur permettant de détecter une grandeur physique dans l'environnement de la caméra (1) est disposé dans le module d'objectif (3) et/ou dans le module de caméra (2).

8. Caméra selon la revendication 7, **caractérisée en ce que** l'unité de communication en champ proche (35) dans le module d'objectif (3) convertit le champ électromagnétique alternatif émis par l'unité de communication en champ proche (25) dans le module de caméra (2) en énergie électrique pour le fonctionnement et la lecture du capteur.

9. Caméra selon la revendication 7 ou 8, **caractérisée en ce qu'**un capteur de température (38) est disposé comme capteur ou un capteur de position (39) et/ou un capteur de distance (45) est disposé comme capteur.

10. Caméra selon la revendication 9, **caractérisée en ce que** des données de correction pour la correction d'une dépendance de température du système optique du module d'objectif (3) sont stockées dans les données de lentille ou des données de correction pour la correction d'une dépendance de position et/ou d'accélération et/ou de distance du système optique du module d'objectif (3) sont stockées dans les données de lentille.

11. Caméra selon la revendication 10, **caractérisée en ce que** la correction de la dépendance de température ou la correction de la dépendance de position et/ou d'accélération et/ou de distance est effectuée dans le module d'objectif (3) ou dans le module de caméra (2).

12. Caméra selon l'une des revendications 1 à 11, **caractérisée en ce que** des données pour une identification univoque du module d'objectif (3) et/ou des données relatives au système optique du module d'objectif (3) et/ou des données d'étalonnage du module d'objectif (3) sont stockées dans les données d'objectif.

13. Procédé de fonctionnement d'une caméra (1) pour le traitement industriel d'images, dans lequel la caméra (1) comprend un module de caméra (2) et un module d'objectif (3) relié de manière amovible à celui-ci par un système optique comportant au moins une lentille optique, des données de lentille sont en outre stockées dans une unité de stockage (33) dans le module d'objectif (3), **caractérisé en ce que** les données de lentille sont lues par le module de caméra (2) par l'intermédiaire d'unités de communication en champ proche (25, 35) coopérantes dans le module d'objectif (3) et le module de caméra (2), et sont utilisées dans une unité de commande de caméra (24) dans le module de caméra (2) pour prendre une image à l'aide de la caméra (1), **et en ce que** l'énergie électrique pour l'alimentation en énergie du module d'objectif (3) est obtenue à partir du champ électromagnétique alternatif émis par l'unité de communication en champ proche (25) dans le module de caméra (2).

14. Procédé selon la revendication 13, **caractérisé en ce que** le module de caméra (2) envoie, au module d'objectif (3), des données de commande pour la commande du module d'objectif (3), par l'intermédiaire des unités de communication en champ proche (25, 35).

15. Procédé selon l'une des revendications 13 ou 14, **caractérisé en ce qu'un** capteur (38) dans le module d'objectif (3) permet de détecter une grandeur physique dans l'environnement du module d'objectif (3), et **en ce que** la grandeur physique permet de commander le fonctionnement du module d'objectif (3) et/ou du module de caméra (2) et/ou de corriger une dépendance des propriétés optiques du module d'objectif (3) par rapport à ladite grandeur physique.

16. Procédé selon la revendication 15, **caractérisé en ce que** des données de correction permettant d'effectuer la correction de la dépendance et/ou des données pour l'identification univoque du module de lentille (3) et/ou des données relatives au système optique du module de lentille (3) et/ou des données d'étalonnage du module de lentille (3) sont stockées dans les données de lentille.

17. Procédé selon l'une des revendications 13 à 16, **caractérisé en ce que** de l'énergie électrique est obtenue à partir du champ électromagnétique alternatif émis par l'unité de communication en champ proche (25) dans le module de caméra (2) pour l'alimentation en énergie d'une lentille optique à focale variable (31) et/ou d'un diaphragme réglable (43) dans le module d'objectif (3) et/ou du capteur (38).
